# EUROPÄISCHE PATENTSCHRIFT

(11) **EP 1 593 597 B1**
(45) Veröffentlichungstag und Bekanntmachung des Hinweises auf die Patenterteilung: **02.04.2008**
(21) Anmeldenummer: 05009659.3
(22) Anmeldetag: 03.05.2005
(51) Int. Cl.: B64G 1/22, E04H 12/18

(54) **Längsentfaltbare oder ausfahrbare Struktur mit flexiblen Längsstreben und Stützelementen**
Deployable or extendible structure with flexible longerons and supporting elements
Structure déployable ou extensible avec longerons flexibles et éléments de support

(30) Priorität: 06.05.2004 DE 102004022449
(43) Veröffentlichungstag der Anmeldung: 09.11.2005
(73) Patentinhaber: Astrium GmbH, 81663 München (DE)
(72) Erfinder: Closs, Martin F., Dr., 80469 München (DE)
(74) Vertreter: Schatt, Markus F.

(56) Entgegenhaltungen:
- US-A- 3 486 279
- US-A- 4 662 130
- US-A- 5 094 046

## Beschreibung

Die vorliegende Erfindung betrifft eine längsentfaltbare oder ausfahrbare Struktur mit mehreren flexiblen Längsstreben, welche zumindest durch senkrecht zur Entfaltungsrichtung angeordnete erste Stützelemente miteinander verbunden sind.

Solche Strukturen sind beispielsweise aus US 5,154,027 oder US 3 486 279 bekannt. Dort wird eine entfaltbare bzw. ausfahrbare Maststruktur beschrieben, deren Längsstreben im gestauten Zustand in Form einer Helix aufgewickelt sind und die sich im entfalteten Zustand parallel zur Entfaltungsrichtung erstrecken. Zur Stabilisierung der Längsstreben sind dünne Querstreben und Diagonalstreben zwischen jeweils zwei der Längsstreben vorgesehen.

Problematisch ist dabei, dass die Versteifung nach dem Stand der Technik unter Umständen eine ausreichende Stabilität der Struktur nur bedingt garantiert. Der Erfindung liegt daher die Aufgabe zugrunde, eine verbesserte längsentfaltbare oder ausfahrbare Struktur mit mehreren flexiblen Längsstreben für eine optische Einrichtung bereitzustelten.

Diese Aufgabe wird gelöst durch die Merkmale des Anspruchs 1. Anspruch 5 umfasst eine spezielle, vorteilhafte Verwendungen der erfindungsgemäßen Struktur.

Gegenstand der Erfindung ist eine längsentfaltbare oder ausfahrbare Struktur mit mehreren flexiblen Längsstreben, welche mit senkrecht zur Entfaltungsrichtung angeordneten Stützelementen verbunden und die Verbindungspunkte mit den Längsstreben jeweils als Drehlager ausgeführt sind. Gemäß der Erfindung ist vorgesehen, dass die Stützelemente als Streulichtblenden ausgebildet sind.

Ringförmig bedeutet entweder mit kreisförmiger oder ovaler Struktur, rahmenförmig bedeutet mit dreieckiger, viereckiger oder vieleckiger Struktur. Wesentlich bei der Struktur ist letztlich, dass die Struktur von einem kompakten, gestauten Zustand in einen ausgedehnten Zustand übergeführt wird, wobei die Struktur sich entlang einer definierten Raumrichtung ausdehnt, die im folgenden als Entfaltungsrichtung bezeichnet wird. Dies kann bevorzugt durch Entfalten oder Ausfahren erfolgen. Die Stützelemente sind als flächig ausgedehnte Elemente in Form von Ringen oder Rahmen ausgebildet und verleihen dadurch der Struktur mehr Stabilität als die dünnen, eindimensional ausgedehnten Querstreben und Diagonalstreben nach dem Stand der Technik. Außerdem kann ein erstes Stützelement nach der Erfindung mehr als zwei Längsstreben untereinander verbinden, im Gegensatz zu den genannten Quer- und Diagonalstreben nach dem Stand der Technik, die nur jeweils zwei Längsstreben miteinander verbinden. Man kommt also mit einer geringeren Zahl von Stützelementen aus.

Eine erste Weiterbildung der Erfindung sieht vor, dass die Längsstreben zusätzlich durch zweite Stützelemente untereinander verbunden sind, welche im entfalteten Zustand der Struktur zumindest abschnittweise diagonal zur Entfaltungsrichtung angeordnet sind, wobei die zweiten Stützelemente fest mit einem Ende jeweils einer der Längsstreben verbunden sind und in Führungen beweglich mit den weiteren Längsstreben verbunden sind und mit Antriebsmitteln zu ihrer kontrollierten Verkürzung und Verlängerung versehen sind.

Durch diese zusätzlichen Stützelemente können Scherkräfte und Torsionsmomente noch besser aufgenommen werden, so dass die gesamte Struktur eine verbesserte Stabilität erhält. Auch hier sind bevorzugt mehr als zwei Längsstreben durch jeweils ein zweites Stützelement untereinander verbunden, im Gegensatz zum Stand der Technik. Es können dabei grundsätzlich beliebig viele Längsstreben durch jeweils ein zweites Stützelement verbunden sein.

Ferner können die zweiten Stützelemente dadurch dazu verwendet werden, entweder die Entfaltung bzw. das Ausfahren zu initiieren bzw, zu beschleunigen, oder sie können dazu verwendet werden, das Ausfahren zu Bremsen und damit die Ausfahrbewegung zu verlangsamen oder beispielsweise am Ende der Ausfahrbewegung ein Einrasten der Struktur abzudämpfen. Dies ist insbesondere wichtig bei Anwendungen der Struktur in Systemen, die sensibel auf Erschütterungen reagieren wie beispielsweise Raumfahrzeuge oder hochgenaue optische Systeme. Die Wirkung der genannten Mittel zur Verkürzung oder Verlängerung greift dabei im wesentlichen am Ende der Längsstreben an. Die bewegliche Verbindung der zweiten Stützelemente mit den übrigen Längsstreben dient im wesentlichen zur definierten Führung der Stützelemente während des Entfaltens bzw. Ausfahrens. Es kann dabei jedes der Mittel zur Verkürzung oder Verlängerung aus einem einzigen Aktuator für alle zweiten Stützelemente einer Gruppe bestehen oder es kann auch jedes Mittel zur Verkürzung oder Verlängerung einen Satz Aktuatoren umfassen, von denen jeder genau einem Stützelement zugeordnet ist. Solche Aktuatoren können beispielsweise Motoren oder Federn sein.

Insbesondere kann vorgesehen werden, dass zwei Gruppen von zweiten Stützelementen verwendet werden. Im entfalteten Zustand ist eine erste Gruppe der zweiten Stützelemente im Uhrzeigersinn um die Entfaltungsrichtung gewunden angeordnet und eine zweite Gruppe der zweiten Stützelemente ist gegen den Uhrzeigersinn um die Entfaltungsrichtung gewunden angeordnet. Eine der Gruppen ist dabei mit dem ersten Mittel zur kontrollierten Verkürzung der zweiten Stützelemente verbunden und die andere der Gruppen mit dem zweiten Mittel zur kontrollierten Verlängerung der zweiten Stützelemente verbunden ist. Es werden in diesem Fall die Längsstreben im gestauten Zustand bevorzugt in Form einer Helix analog zum Stand der Technik aufgewickelt. Je nachdem, ob die helixförmige Wicklung der Längsstreben im Uhrzeigersinn oder gegen den Uhrzeigersinn erfolgt, wird diejenige Gruppe zweiter Stützelemente, die in der gleichen Richtung gewunden ist wie die Längsstreben, mit dem Mittel zur Verkürzung der Stützelemente verbunden und die jeweils andere Gruppe mit dem Mittel zur Verlängerung der Stützelemente.

Dabei kann insbesondere vorgesehen sein, dass im entfalteten Zustand eine erste Gruppe der Längsstreben im Uhrzeigersinn um die Entfaltungsrichtung gewunden angeordnet ist und eine zweite Gruppe der Längsstreben gegen den Uhrzeigersinn um die Entfaltungsrichtung gewunden angeordnet ist. Damit können auf besonders optimale Weise Scherkräfte und Torsionsmomente durch die Längsstreben aufgenommen werden.

Eine spezielle vorteilhafte Verwendung einer vorstehend beschriebenen Struktur findet sich bei einer optischen entfaltbaren Einrichtung eines Raumfahrzeugs.

Beispielsweise kann die Erfindung in einer Maststruktur, einem Roboterarm oder in Stützträgern für Solargeneratoren oder Antennen verwendet werden. Gleiches gilt grundsätzlich auch für terrestrische Anwendungen. Gerade aber bei Raumfahrzeugen muss für die Startphase ein möglichst kompaktes Stauvolumen aller Einrichtungen garantiert werden, aber es müssen die Einrichtungen auch den hohen Lasten beim Transport von der Erde in den Weltraum Stand halten können.

Die Struktur kann beispielsweise bei einem Objektiv, einem Blendensystem oder einem Filtersystem verwendet werden. Separate Blenden werden entbehrlich. Die Erfindung kann dabei grundsätzlich für terrestrische optische Apparate verwendet werden. Besondere Vorteile ergeben sich jedoch bei der Verwendung für optische Apparate an oder in Raumfahrzeugen, da sich dann auch noch die Vorteile des kompakten Stauvolumens und der verbesserten Stabilität wie oben beschrieben ergeben.

Eine andere Weiterbildung der Erfindung sieht vor, dass die Längsstreben im entfalteten Zustand der Struktur zumindest abschnittsweise parallel zur Entfaltungsrichtung angeordnet sind.

Noch eine andere Weiterbildung der Erfindung sieht vor, dass die Längsstreben im entfalteten Zustand der Struktur zumindest abschnittsweise diagonal zur Entfaltungsrichtung angeordnet sind. In diesem Fall können Scherkräfte und Torsionsmomente durch die Längsstreben selbst aufgenommen werden, zweite Stützelemente werden damit weitgehend entbehrlich. Grundsätzlich können aber auch hier zusätzliche zweite Stützelemente wie oben beschrieben und auch die oben genannten Mittel zur kontrollierten Verkürzung oder Verlängerung der zweiten Stützelemente vorgesehen werden.

Spezielle Ausführungsbeispiele der vorliegenden Erfindung werden nachfolgend anhand der Figuren 1 bis 4 am Beispiel einer ausfahrbaren Blendenanordnung für optische Raumfahrt-Apparate erläutert.

Es zeigen:
- Fig. 1 a) und b) :: Erfindungsgemäße Strukturen im entfalteten bzw. ausgefahrenen Zustand
- Fig. 2 a) bis c):: Ausfahren einer Struktur nach Fig. 1 a)
- Fig. 3:: Struktur nach Fig. 2 c) mit Mitteln zur Verkürzung und Verlängerung der zweiten Stützelemente
- Fig. 4 a) bis c):: Ausfahren einer alternativen Struktur ohne zweite Stützelemente

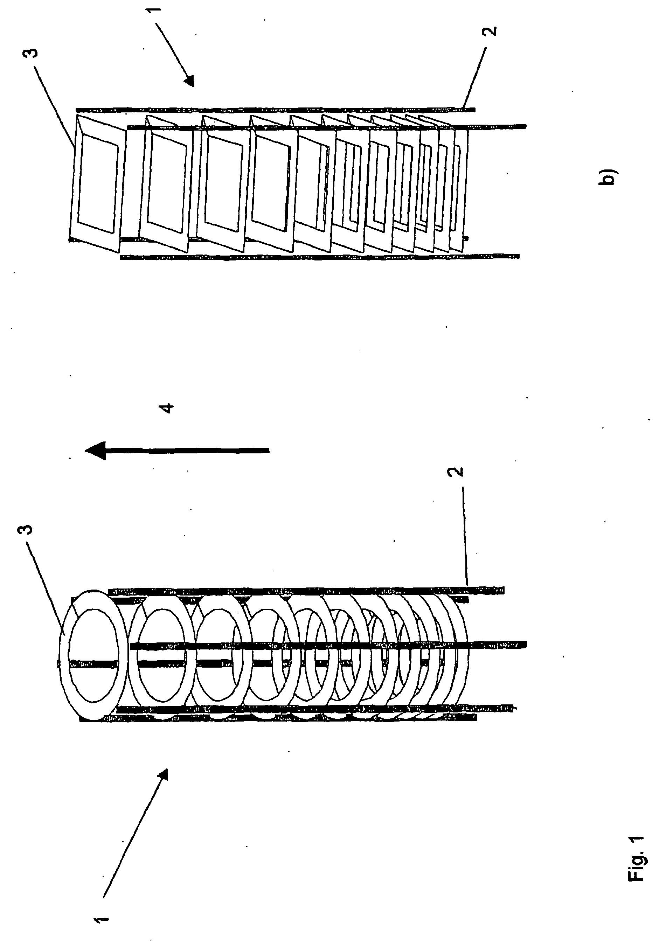

Fig. 1 a) zeigt eine ausfahrbare Blendenstruktur für optische Raumfahrt-Apparate die kreisringförmige Streulichtblenden 3 aufweist, welche gleichzeitig als Stützelemente zur Stabilisierung flexibler Längsstreben 2 dienen. Die Längsstreben 2 sind drehbar mit den Streulichtblenden 3 über geeignete Drehlager verbunden. Die Längsstreben 2 können beispielsweise als Bandfedern aus Metall ausgebildet sein oder aus Fiberglas oder glasfaserverstärktern Kunststoff bestehen. Die Blendenstruktur 1 erstreckt sich entlang einer Entfaltungsrichtung 4.

Fig. 1 b) zeigt eine alternative Bauweise zu Fig. 1 a), wobei nun rahmenförmige, viereckige Streulichtblenden 3 vorgesehen sind. Im übrigen entspricht die Blendenanordnung 1 derjenigen nach Fig. 1 a).

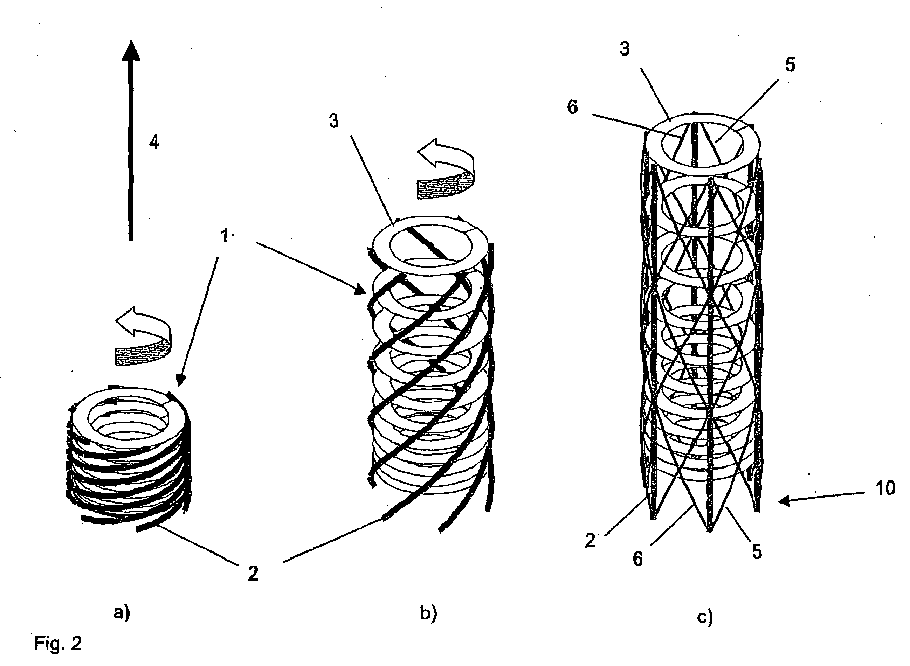

Figuren 2 a) bis c) zeigen schematisch das Ausfahren einer Struktur nach Fig. 1 a). Dabei zeigt Fig. 2 a) den gestauten Zustand der Blendenstruktur 1, wobei die Struktur derart in sich verdreht ist, dass die flexiblen Längsstreben 2 im Uhrzeigersinn um die Entfaltungsrichtung 4 herum gewunden sind. In diesem Zustand kann die Blendenstruktur 1 durch geeignete Halterungen arretiert werden. Die Längsstreben 2 sind fest mit einem nicht dargestellten Trägerelement verbunden, so dass die Längsstreben am unteren Ende 10 fixiert sind. Durch die Eigensteifigkeit der Längsstreben 2 ergeben sich dabei Torsionsmomente, die die Blendenstruktur nach dem Lösen der Halterungen wieder in die entfaltete Position nach Fig. 1 a) zwingen. Fig. 2 b) zeigt einen Teilschritt dieses Vorgangs nach Lösen der Halterungen, wobei die Blendenstruktur 1 den ausgefahrenen Zustand fast erreicht hat. Fig. 2 c) zeigt schließlich die Blendenstruktur im ausgefahrenen Zustand, der Fig. 1 a) entspricht. Während des Ausfahrens vollführt das obere Ende 9 der Blendenstruktur 1 eine Rotationsbewegung gegen den Uhrzeigersinn um die Entfaltungsrichtung 4.

Dabei sind in Fig. 2c) zusätzlich diagonal um die Blendenstruktur gewundene Seile 5, 6 dargestellt, die als zweite Stützelemente dienen. Jedes der Seile 5, 6 verbindet dabei mehrere der Längsstreben 2 untereinander. Eine erste Gruppe von Seilen 5 ist im Uhrzeigersinn um die Entfaltungsrichtung 4 um die Blendenstruktur gewunden, eine zweite Gruppe 6 entgegen dem Uhrzeigersinn. Diese Seile 5, 6 können elastisch ausgebildet sein, damit sie sich beim Verstauen der Blendenstruktur 1 geeignet verformen bzw. dehnen können.

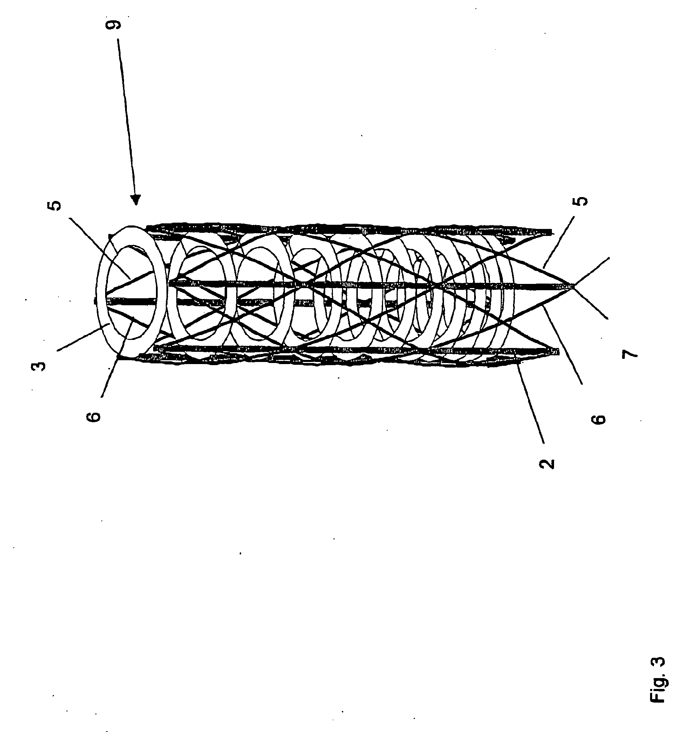

Entsprechend einer Ausgestaltung nach Fig. 3 können die Seile 5, 6 aber auch unelastisch ausgebildet sein. Dann sind Mittel 7 wie beispielsweise Motoren mit Spulen zum kontrollierten Verkürzen der Seile 5 bei dem Ausfahren der Blendenstruktur 1 vorgesehen. Dieses Verkürzen der Seile 5 unterstützt die Ausfahrbewegung der Blendenstruktur 1. Um das Verkürzen zu ermöglichen, sind die Seile 5 lediglich am oberen Ende 9 der Blendenstruktur fest mit den Längsstreben 2 verbunden. Mit den übrigen Längsstreben 2 ist jedes der Seile beweglich verbunden, wobei die Seile 5 beispielsweise in Ösen oder ähnlichen Führungen gelagert sein können. Gleiches gilt auch für die Seile 6 der zweiten Gruppe, wobei diese jedoch mit einem Mittel 8 zur kontrollierten Verlängerung der Seile 6 verbunden sind. Auch hierfür kann ein Spulenmechanismus verwendet werden, der einen Motor oder auch eine Feder aufweist. Damit kann ein unkontrolliert schnelles Ausfahren unterbunden und ein ruckartiges Einrasten der Blendenstruktur 1 gedämpft werden. Nach dem vollständigen Ausfahren der Blendenstruktur 1 werden die Seile 5, 6 bevorzugt unter einer gewissen Vorspannung arretiert, um die Stabilität der Blendenstruktur 1 gegen Scherkräfte und Torsionsmomente zu garantieren.

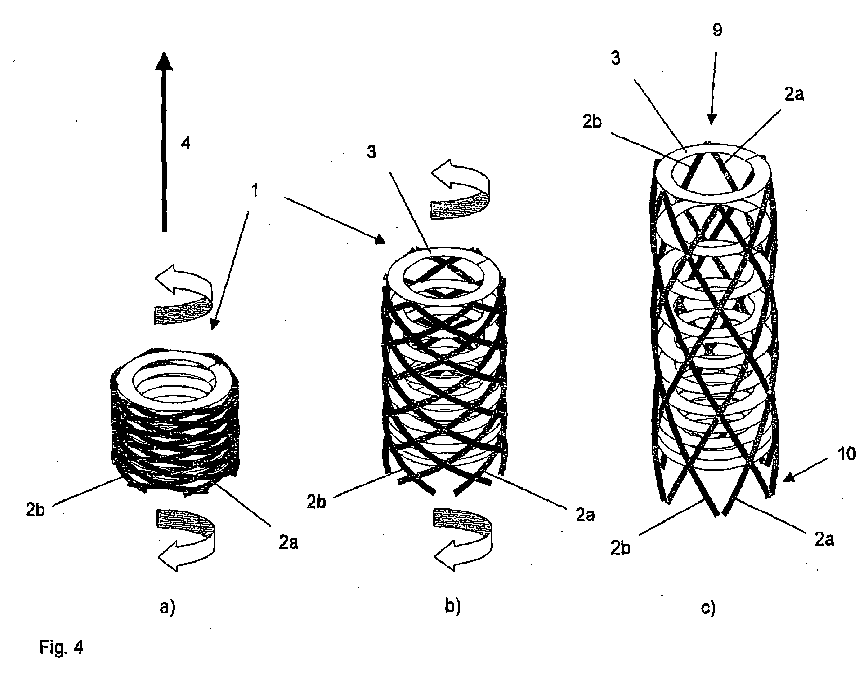

Figuren 4 a) bis c) zeigen eine alternative Ausführungsform, bei der die Längsstreben im ausgefahrenen Zustand der Blendenstruktur 1 nicht parallel zur Entfaltungsrichtung 4 angeordnet sind, sondern diagonal zur Entfaltungsrichtung 4. Dabei ist in jedem Stadium des Ausfahrens eine erste Gruppe 2a von Längsstreben im Uhrzeigersinn um die Entfälturigsrichtung 4 herum gewunden und eine zweite Gruppe 2b von Längsstreben ist gegen den Uhrzeigersinn um die Entfaltungsrichtung 4 gewunden angeordnet. Jede Längsstrebe der erste Gruppe 2a ist zumindest am oberen Ende 9 gelenkig mit einer Längsstrebe der zweiten Gruppe 2b verbunden. Die Streulichtblenden 3 sind über Drehgelenke mit den Längsstreben der ersten und zweiten Gruppe 2a, 2b verbunden.

Am unteren Ende 10 der Blendenstruktur 1 sind die Längsstreben 2a, 2b bevorzugt drehbar auf einem nicht dargestellten Trägerelement gelagert, so dass auch das untere Ende 10 der Blendenstruktur 1 eine Rotationsbewegung ausführen kann. Es kann vorgesehen sein, dass zwischen dem unteren Ende 10 der Blendenstruktur und dem Trägerelement ein Einrastmechanismus vorgesehen wird, der nach dem Ausfahren der Blendenstruktur 1 einrastet und ein weiteres Rotieren der Blendenstruktur 1 verhindert.

Die genannte Blendenstruktur 1 kann auf ein optisches Sensor- oder Bildaufnahmesystem montiert werden. Man kann die erfindungsgemäße Struktur aber auch dazu verwenden, optische Elemente zu tragen. So können beispielsweise Linsen oder Spiegel (z.B. der Sekundärspiegel) eines optischen Teleskops am oberen Ende 9 der Struktur befestigt werden. Damit ergibt sich die Möglichkeit, optische Instrumente großer Baulänge zu realisieren, die sich dennoch kompakt verstauen lassen.

## Patentansprüche

1. Längsentfaltbare oder ausfahrbare Struktur (1) mit mehreren flexiblen Längsstreben (2), welche mit senkrecht zu einer Entfaltungsrichtung (4) angeordneten Stützelementen verbunden und Verbindungspunkte mit den Längsstreben (2) jeweils als Drehlager ausgeführt sind, **dadurch gekennzeichnet, dass** die Stützelemente als Streulichtblenden (3) ausgebildet sind.

2. Struktur nach Anspruch 1, **dadurch gekennzeichnet, dass** die Längsstreben (2) zusätzlich durch zweite Stützelemente (5, 6) untereinander verbunden sind, welche im entfalteten Zustand der Struktur zumindest abschnittweise diagonal zur Entfaltungsrichtung (4) angeordnet sind, wobei die zweiten Stützelemente (5, 6) fest mit einem Ende jeweils einer der Längsstreben (2) verbunden sind und in Führungen beweglich mit den weiteren Längsstreben (2) verbunden sind und mit Antriebsmitteln (7) zu ihrer kontrollierten Verkürzung und Verlängerung versehen sind.

3. Struktur nach Anspruch 2, **dadurch gekennzeichnet, dass** im entfalteten Zustand eine erste Gruppe (5) der zweiten Stützelemente im Uhrzeigersinn um die Entfaltungsrichtung (4) gewunden angeordnet ist und eine zweite Gruppe (6) der zweiten Stützelemente gegen den Uhrzeigersinn, wobei die erste Gruppe (5) mit einem Antriebsmittel zur kontrollierten Verkürzung der zweiten Stützelemente verbunden ist und die zweite Gruppe (6) mit einem Antriebsmittel zur kontrollierten Verlängerung der zweiten Stützelemente.

4. Struktur nach den Ansprüchen 1 bis 3, **dadurch gekennzeichnet, dass** im entfalteten Zustand eine erste Gruppe (2a) der Längsstreben im Uhrzeigersinn um die Entfaltungsrichtung (4) gewunden angeordnet ist und eine zweite Gruppe (2b) der Längsstreben entgegen dem Uhrzeigersinn um die Entfaltungsrichtung (4) gewunden angeordnet ist.

5. Verwendung einer Struktur nach einem der Ansprüche 1 bis 4 bei einer optischen entfaltbaren Einrichtung eines Raumfahrzeugs,

## Claims

1. Longitudinally deployable or extendible structure (1) with a plurality of flexible longerons (2) which are connected to supporting elements arranged perpendicularly to a deployment direction (4), and connecting points to the longerons (2) are each designed as rotational bearings, **characterized in that** the supporting elements are designed as baffle plates (3).

2. Structure according to Claim 1, **characterized in that** the longerons (2) are additionally connected to one another by second supporting elements (5, 6) which, in the deployed state of the structure, are arranged, at least in some sections, diagonally with respect to the deployment direction (4), the second supporting elements (5, 6) being connected fixedly to one end in each case of one of the longerons (2) and being connected movably in the guides to the further longerons (2) and being provided with driving means (7) for their controlled shortening and lengthening.

3. Structure according to Claim 2, **characterized in that**, in the deployed state, a first group (5) of the second supporting elements is arranged wound around the deployment direction (4) in the clockwise direction and a second group (6) of the second supporting elements in the anticlockwise direction, the first group (5) being connected to driving means for the controlled shortening of the second supporting elements and the second group (6) being connected to a driving means for the controlled lengthening of the second supporting elements.

4. Structure according to Claims 1 to 3, **characterized in that**, in the deployed state, a first group (2a) of longerons is arranged wound around the deployment direction (4) in the clockwise direction and a second group (2b) of longerons is arranged wound around the deployment direction (4) in the anticlockwise direction.

5. Use of a structure according to one of Claims 1 to 4 in an optical, deployable apparatus of a space vehicle.

## Revendications

1. Structure déployable ou extensible (1) comprenant plusieurs longerons flexibles (2), qui sont assemblés avec des éléments de support disposés perpendiculairement à une direction de déploiement (4) et des points d'assemblage avec les longerons (2) sont réalisés chacun sous forme de coussinet de pivotement, **caractérisée en ce que** les éléments de support sont configurés sous forme de diaphragmes de protection contre la lumière diffusée (3).

2. Structure suivant la revendication 1, **caractérisée en ce que** les longerons (2) sont assemblés en supplément entre eux par des deuxièmes éléments de support (5, 6), qui sont disposés dans l'état de déploiement de la structure, au moins par sections, en diagonale de la direction de déploiement (4), les deuxièmes éléments de support (5, 6) étant assemblés fixement avec une extrémité de respectivement l'un des longerons (2), ayant un assemblage mobile dans des guidages avec les autres longerons (2) et étant munis de moyens d'entraînement (7) pour leur raccourcissement et leur allongement contrôlés.

3. Structure suivant la revendication 2, **caractérisée en ce que**, dans l'état de déploiement, un premier groupe (5) des deuxièmes éléments de support est disposé en spirale dans le sens des aiguilles d'une montre autour de la direction de déploiement (4) et un second groupe (6) des deuxièmes éléments de support est disposé dans le sens inverse à celui des aiguilles d'une montre, le premier groupe (5) étant alors raccordé à un moyen d'entraînement pour le raccourcissement contrôlé des deuxièmes éléments de support et le second groupe (6) étant raccordé à un moyen d'entraînement pour l'allongement contrôlé des deuxièmes éléments de support.

4. Structure suivant l'une des revendications 1 à 3, **caractérisée en ce que**, dans l'état de déploiement, un premier groupe (2a) des longerons est disposé en spirale dans le sens des aiguilles d'une montre autour de la direction de déploiement (4) et un second groupe (2b) des longerons est disposé en spirale dans le sens inverse à celui des aiguilles d'une montre autour de la direction de déploiement (4).

5. Utilisation d'une structure suivant l'une des revendications 1 à 4 dans un dispositif déployable optiquement d'un véhicule spatial.
